# EUROPÄISCHE PATENTANMELDUNG

(11) **EP 2 237 394 A2**
(43) Veröffentlichungstag der Anmeldung: **06.10.2010**
(21) Anmeldenummer: 10002784.6
(22) Anmeldetag: 17.03.2010
(51) Int. Cl.: H02K 3/50, H02K 9/06, H02K 23/26

(54) **Anker für einen durchzugsbelüfteten Elektromotor**

(30) Priorität: 02.04.2009 DE 102009016024
(71) Anmelder: Metabowerke GmbH, 72622 Nürtingen (DE)
(72) Erfinder: Schmohl, Michael, 72119 Ammerbuch (DE)
(74) Vertreter: Raunecker, Klaus Peter

(57) **Zusammenfassung**

Die Erfindung betrifft einen Anker (2) für einen durchzugsbelüfteten Elektromotor, insbesondere einen Universalmotor, insbesondere für den Einsatz bei Elektrowerkzeuggeräten, mit einem drehfest auf einer Ankerwelle (4) angeordneten und Längsnuten (8) aufweisenden Blechpaket (6), wobei aus den Längsnuten (8) stirnseitig Drahtwindungen einer Ankerwicklung (10) austreten, die dort axial beidseitig einen Wickelkopf (20, 22) bilden, und mit einem Kollektor (14) und einem Lüfterrad (16), die auf gegenüberliegenden Seiten des Blechpaketes (6) ebenfalls drehfest auf der Ankerwelle (4) angeordnet sind, wobei in einige oder alle Längsnuten (8) des Blechpakets (6) ein in Längsrichtung ausgerichteter Stab (28) eingesetzt ist, und die Stäbe (28) zumindest auf der dem Lüfterrad (16) zugewandten Stirnseite (24) des Blechpakets (6) axial in Längsrichtung über den Wickelkopf (20) überstehen; erfindungsgemäß wird vorgeschlagen, dass die Stäbe (28) mit ihren freien Stabenden (30) an dem Lüfterrad (16) festgelegt und dadurch gegen radial wirkende Fliehkräfte gestützt sind.

## Beschreibung

Die Erfindung betrifft einen Anker für einen durchzugsbelüfteten Elektromotor, insbesondere einen Universalmotor, insbesondere für den Einsatz bei Elektrowerkzeuggeräten, mit einem drehfest auf einer Ankerwelle angeordneten und Längsnuten aufweisenden Blechpaket, wobei aus den Längsnuten stirnseitig Drahtwindungen einer Ankerwicklung austreten, die dort axial beidseitig einen Wickelkopf bilden, und mit einem Kollektor und einem Lüfterrad, die auf gegenüberliegenden Seiten des Blechpaketes ebenfalls drehfest auf der Ankerwelle angeordnet sind, wobei in einige oder alle Längsnuten des Blechpakets ein in Längsrichtung ausgerichteter Stab eingesetzt ist, und die Stäbe zumindest auf der dem Lüfterrad zugewandten Stirnseite des Blechpakets axial in Längsrichtung über den Wickelkopf überstehen, wobei die Stäbe mit ihren freien Stabenden an dem Lüfterrad festgelegt und dadurch gegen radial wirkende Fliehkräfte gestützt sind.
Bei durchzugsbelüfteten Elektromotoren insbesondere von Elektrowerkzeuggeräten, wie z. B. Winkelschleifern oder Bohrmaschinen, wo im Zuge der Bearbeitung partikulärer Schmutz, Schleif- oder Bohrstaub entsteht, besteht grundsätzlich das Problem einer Beeinträchtigung der Ankerwicklung, insbesondere des Wickelkopfs oder der Wickelköpfe der Ankerwicklung, da Partikel und Staub im Kühlluftstrom mitgerissen werden und abrasiv auf die Ankerwicklung einwirken.

Es wurden bereits Vorschläge unterbreitet, dem entgegenzuwirken. So wurde mit DE 1 613 074 A vorgeschlagen, den Wickelkopf eines Ankers mit einer hochsaugfähigen, flexiblen und porösen Einlage aus Textilgewebe, Glasfaser oder Vlies, die mit Träufelharz durchtränkt ist, zu bedecken. Es soll so nach der Aushärtung eine widerstandsfähige Armierung des Wickelkopfs erreicht werden.

Mit DE 196 20 840 A1 wurde vorgeschlagen, auf die Wickelköpfe entsprechend deren gewölbter Form stegförmige Elemente aus mit Lack getränkten Filzstreifen oder aus Epoxyharz aufzubringen. Hierdurch soll bei rotierendem Antrieb des Ankers verhindert werden, dass Partikel auf den Wickelkopf auftreffen.

Mit EP 0 261 306 A2 und DE 298 21 112 U1 wurde vorgeschlagen, bei einem oder bei beiden Wickelköpfen einen sich konisch oder kalottenförmig verjüngenden Korb aus zwei zur Längsachse konzentrisch verlaufenden ringförmigen Elementen und diese Elemente verbindenden geneigten Streben vorzusehen, der auf den Wickelkopf oder auf das Blechpaket oder den Kollektor drehfest aufbringbar ist und ebenfalls bei rotierendem Antrieb einen Schutz gegen Partikelbeaufschlagung des Wickelkopfs bilden soll.

Ein Anker der eingangs erwähnten Art und gemäß dem Oberbegriff des Anspruchs 1 wurde von der Anmelderin gemäß WO 2007/118483 A1 vorgeschlagen. Die mit ihren freien Stabenden über den jeweiligen Wickelkopf überstehenden Stäbe bilden einen sehr preiswert herstellbaren und mit dem Ankerblechpaket integrierten Schutzschild, welcher bewirkt, dass nur wenig oder kein Partikelstaub auf den Wickelkopf auftreffen und die dort stets vorgesehene Träufelharzbeschichtung und schließlich die Drahtwindungen des Wickelkopfs beschädigen kann.

Hiervon ausgehend liegt der vorliegenden Erfindung die Aufgabe zugrunde, den von der Anmelderin vorgeschlagenen Anker noch weitergehend zu verbessern, insbesondere im Hinblick auf eine noch bessere Schutzwirkung und im Hinblick auf die Betriebssicherheit.

Diese Aufgabe wird bei einem Anker der genannten Art erfindungsgemäß dadurch gelöst, dass die Stäbe mit ihren freien Stabenden an dem Lüfterrad festgelegt und dadurch gegen radial wirkende Fliehkräfte gestützt sind.

Es wird also erfindungsgemäß vorgeschlagen, den axialen Überstand der Stäbe auf der dem Lüfterrad zugewandten Seite des Ankerblechpakets zu verlängern, so dass eine käfigartig anmutende Umschließung des Wickelkopfs und der Ankerwelle auf dieser Seite entsteht, wodurch eine abschirmende Wirkung im Hinblick auf nach radial innen gesogenen Partikelschmutz weiter verbessert wird. Dadurch, dass erfindungsgemäß der Überstand der Stäbe bis hin zum Lüfterrad verlängert wird und die freien Stabenden an dem Lüfterrad festgelegt werden, wird eine Stabilisierung und Stützung der Stäbe erreicht. Es besteht damit nicht die Gefahr, dass sich die Stäbe im Zuge des Betriebs aufgrund der dabei auftretenden Fliehkräfte verbiegen oder gar brechen. Dies erweist sich in besonderem Maße als vorteilhaft, wenn weniger bruchfeste Materialien, wie zum Beispiel Holz, Kunststoff oder Keramik, für die Stäbe eingesetzt werden. Doch selbst wenn Metallstäbe verwendet werden, erweist sich die Stabilisierung und Stützung der Stäbe als vorteilhaft, da hierdurch beispielsweise bei der Handhabung der fertig montierten Anker bei der Produktion von Elektrowerkzeuggeräten keine Verbiegung der Stäbe mehr erfolgen kann.

Zur Festlegung der Stabenden an dem Lüfterrad wird nach einer bevorzugten Ausführungsform der Erfindung vorgeschlagen, dass die Stabenden in axiale Öffnungen oder in Vertiefungen in dem Lüfterrad eingreifen. Dabei sind die Stabenden und die Öffnungen oder Vertiefungen im wesentlichen komplementär und vorzugsweise passgenau aufeinander abgestimmt, so dass die Stabenden mit dem Lüfterrad klemmschlüssig im Presssitz verbindbar sind. Diese Verbindung wird vorzugsweise hergestellt, wenn das Lüfterrad auf die Ankerwelle aufgepresst wird.

Es hat sich als zweckmäßig und vorteilhaft erwiesen, wenn die Vertiefungen in dem Lüfterrad in axialer Richtung eine Tiefe von 1 - 8 mm, insbesondere 2 - 6 mm und weiter insbesondere 3 - 6 mm aufweisen.

Bei dem Lüfterrad handelt es sich vorzugsweise um ein mit den Öffnungen oder Vertiefungen einstückig hergestelltes Spritzgussteil.

Es wurde bereits darauf hingewiesen, dass es sich als vorteilhaft erweist, dass die Stäbe die Ankerwelle käfigartig umgeben, indem sie in axialer Richtung bis zu dem Lüfterrad reichen. In Weiterbildung der Erfindung erweist es sich als vorteilhaft, wenn die Stäbe einen radialen Abstand vom Außenumfang der Ankerwelle von 5 - 10 mm, insbesondere von 5 - 8 mm haben, was sich bei kleinen Elektromotoren, insbesondere Universalmotoren für Elektrowerkzeuggeräte, als optimal für den Schutz der mit Träufelharz beschichteten Wickelköpfe erweist.

Des weiteren erweist es sich als vorteilhaft, wenn die freien Stabenden radial innerhalb eines Hauptwirkungsbereichs der Lüfterradschaufeln festgelegt sind. Auf diese Weise wird die Schutzschildwirkung der Stäbe weiter optimiert.

Um auch den kollektorseitigen Wickelkopf gegen abrasive Beschädigung zu schützen, erweist es sich gleichermaßen als vorteilhaft, wenn die Stäbe auch auf der dem Kollektor zugewandten Stirnseite über den Wickelkopf axial überstehen. Der axiale Überstand auf der dem Kollektor zugewandten Seite beträgt vorteilhafterweise 3 - 20 mm. Dabei erweist es sich als vorteilhaft, wenn jeweils ein durchgehender in Längsrichtung also länger als die axiale Abmessung des Blechpakets ausgebildeter Stab verwendet wird, obschon dies nicht zwingend notwendig ist. Die Stäbe werden in vorteilhafter Weise in die Längsnuten des Ankerblechpakets eingeklebt.

Die Erfindung betrifft des weiteren einen durchzugsbelüfteten Elektromotor. Es besteht die Aufgabe, einen dauerhaft verschleißunempfindlichen Elektromotor bereit zu stellen, der auf einfache und kostengünstige Weise einen Schutz der Ankerwicklung vor Partikelbeaufschlagung zur Verfügung stellt und selbst störunanfällig ist. Gleichermaßen besteht die Aufgabe, ein Elektrowerkzeuggerät im Hinblick auf abrasiv wirkende Beanspruchung des durchzugsbelüfteten Elektromotors zu verbessern. Diese weiteren Aspekte werden gelöst durch einen Elektromotor mit den Merkmalen des Anspruchs 11 und ein Elektrowerkzeuggerät mit den Merkmalen des Anspruchs 12.

Weitere Merkmale, Einzelheiten und Vorteile der Erfindung ergeben sich aus den beigefügten Patentansprüchen und aus der zeichnerischen Darstellung und nachfolgenden Beschreibung einer bevorzugten Ausführungsform des erfindungsgemäßen Ankers und seiner Komponenten. In der Zeichnung zeigt:
Figur 1 eine Seitenansicht eines erfindungsgemäßen Ankers und
Figur 2 eine Schnittansicht mit Schnittebene A-A in Figur 1;
Figur 3
   a - e verschiedene Ansichten des Lüfterrads.

Die Figuren zeigen einen insgesamt mit dem Bezugszeichen 2 bezeichneten Anker für einen belüfteten Elektromotor, insbesondere für ein Elektrowerkzeuggerät, beispielsweise ein Schleif- oder Bohrwerkzeuggerät. Der Anker 2 umfasst eine im beispielhaften Fall durchgehende Ankerwelle 4, auf der ein Blechpaket 6 mit einer Mehrzahl von Längsnuten 8 und einer Ankerwicklung 10 vorgesehen ist. Die metallische Ankerwelle 4 trägt im dargestellten Fall eine Kunststoffummantelung 12. Entweder ist das Blechpaket 6 mit der Ankerwicklung 10 auf diese kunststoffummantelte Ankerwelle 4 aufgepresst oder der Kunststoff ist zwischen Blechpaket 6 und metallischem Teil der Ankerwelle 4 eingespritzt. Man erkennt Nuten 13 auf der Oberfläche des metallischen Teils der Ankerwelle 4 zur besseren Halterung der Kunststoffummantelung 12. Jedenfalls ist das Blechpaket 6 drehfest auf der Ankerwelle 4 befestigt. Des Weiteren ist ein Kollektor 14 und ein Lüfterrad 16 vorgesehen, mittels dessen ein Kühlluftstrom in Richtung der Pfeile 18 an Kollektor 14 und Blechpaket 6 vorbei in Richtung auf das Lüfterrad 16 erzeugt wird.

Die Längsnuten 8 nehmen eine in der Zeichnung nicht näher dargestellte Vielzahl von Drahtwindungen der Ankerwicklung 10 auf. Diese Drahtwindungen bilden zum Lüfterrad 16 hin einen ersten Wickelkopf 20 und zum Kollektor 14 hin einen zweiten Wickelkopf 22. Zusätzlich zu den Drahtwindungen ist in den Längsnuten 8 jeweils ein über beide Stirnseiten 24, 26 des Blechpakets überstehender Stab 28 untergebracht. Der jeweilige Stab 28 ist entweder nach dem Aufbringen der Ankerwicklung 10 in die jeweilige Längsnut 8 eingesetzt und liegt dann von radial außen gegen die Drahtwindungen der Ankerwicklung 10 an. Es ist aber auch denkbar, dass der jeweilige Stab quasi mit eingewickelt ist, also durch Drahtwindungen der Ankerwicklung 10 hindurchgeführt ist. Die Drahtwindungen der Ankerwicklung 10 sind im Bereich der Wickelköpfe 20 und 22 mit Träufelharz fixiert und armiert. Durch das Träufelharz werden auch die Stäbe 28 eingebettet und in den Längsnuten 8 fixiert.

Bei rotierendem Antrieb des Ankers 2 bilden die überstehenden Enden der Stäbe 28 einen rotierenden Schutzschild, mit dem verhindert werden kann, dass im Kühlluftstrom mitgeführte Partikel die Wickelköpfe 20, 22 beaufschlagen und abrasiv abnutzen.

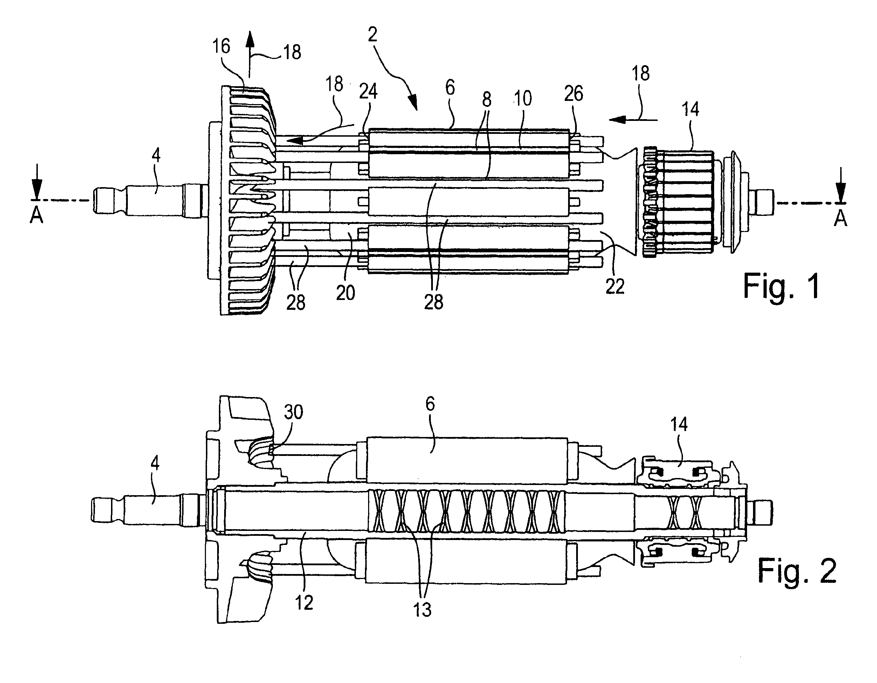

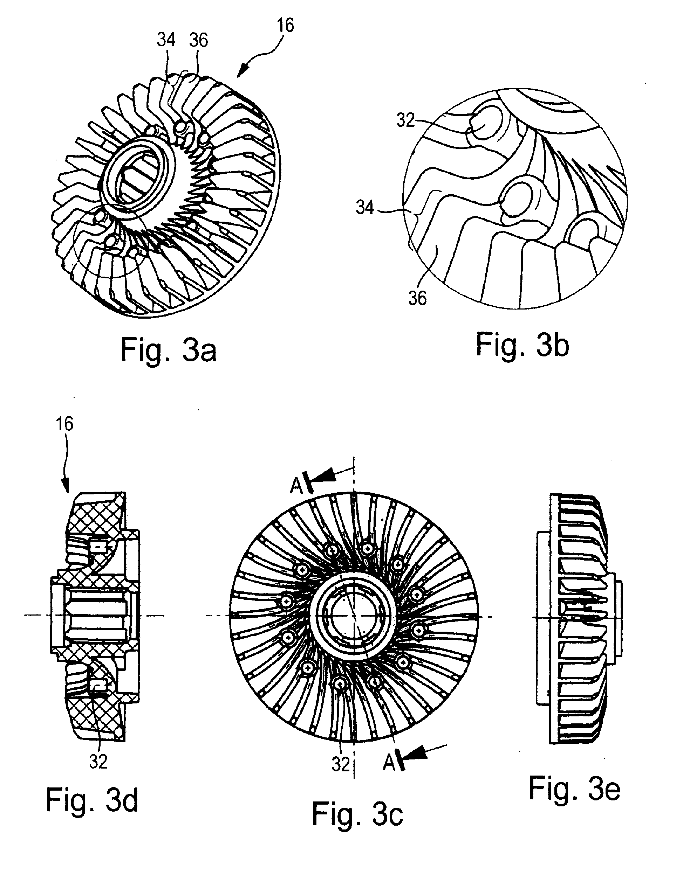

Wie in den Figuren 1 - 3 dargestellt, stehen die Stäbe 28 auf der Seite des Wickelkopfs 20, also auf der dem Lüfterrad 16 zugewandten Seite nicht nur geringfügig nach Art eines Zaunes, wie auf der gegenüberliegenden Seite zum Kollektor 14 hin vor, sondern sie erstrecken sich bis zum Lüfterrad 16 und sind mit ihren freien Enden 30 jeweils in Vertiefungen 32 des Lüfterrads 16 festgelegt. Die Vertiefungen 32 sind komplementär und passgenau zu den freien Enden 30 der Stäbe 28 ausgebildet, so dass das Lüfterrad 16 und die freien Enden 30 der Stäbe 28 in einem Presssitz miteinander gefügt sind. Auf diese Weise wird eine erhebliche Stabilisierung der Stäbe 28 erreicht, und es kann sicher verhindert werden, dass die Stäbe 28 in ihrem über den Wickelkopf 20 axial überstehenden Abschnitt infolge von im Betrieb des Elektromotors auftretenden Fliehkräften verbogen werden. Außerdem ist ein noch optimalerer Schutz des flügelradseitigen Wickelkopfs 20 erreicht, weil die Stäbe mit einem größeren axialen Überstand über den Wickelkopf 20 ausgebildet werden können. Es wird gewissermaßen ein geschlossener Käfig zwischen dem Wickelkopf 20 und dem Lüfterrad 16 erreicht, der eine sehr wirksame Abschirmung gegen Partikelschmutz bildet und außerdem optisch ansprechender wirkt als frei endende Stäbe. Wie sich den Figuren 3a bis 3e entnehmen lässt, ist die Verbindung der freien Enden 30 der Stäbe 28 auch radial innerhalb eines Hauptwirkungsbereichs 34 der Lüfterradschaufeln 36 vorgesehen. Auch hierdurch wird die abschirmende Wirkung des Käfigs aus Stäben 28 auf der Lüfterradseite des Ankerblechpakets 6 verbessert.

## Patentansprüche

1. Anker (2) für einen durchzugsbelüfteten Elektromotor, insbesondere einen Universalmotor, insbesondere für den Einsatz bei Elektrowerkzeuggeräten, mit einem drehfest auf einer Ankerwelle (4) angeordneten und Längsnuten (8) aufweisenden Blechpaket (6), wobei aus den Längsnuten (8) stirnseitig Drahtwindungen einer Ankerwicklung (10) austreten, die dort axial beidseitig einen Wickelkopf (20, 22) bilden, und mit einem Kollektor (14) und einem Lüfterrad (16), die auf gegenüberliegenden Seiten des Blechpaketes (6) ebenfalls drehfest auf der Ankerwelle (4) angeordnet sind, wobei in einige oder alle Längsnuten (8) des Blechpakets (6) ein in Längsrichtung ausgerichteter Stab (28) eingesetzt ist, und die Stäbe (28) zumindest auf der dem Lüfterrad (16) zugewandten Stirnseite (24) des Blechpakets (6) axial in Längsrichtung über den Wickelkopf (20) überstehen, **dadurch gekennzeichnet, dass** die Stäbe (28) mit ihren freien Stabenden (30) an dem Lüfterrad (16) festgelegt und **dadurch** gegen radial wirkende Fliehkräfte gestützt sind.

2. Anker nach Anspruch 1, **dadurch gekennzeichnet, dass** die Stabenden (30) in axiale Öffnungen oder in Vertiefungen (32) in dem Lüfterrad (16) eingreifen.

3. Anker nach Anspruch 2, **dadurch gekennzeichnet, dass** die Stabenden (30) und die Öffnungen oder Vertiefungen (32) im wesentlichen komplementär und passgenau aufeinander abgestimmt sind.

4. Anker nach Anspruch 2 oder 3, **dadurch gekennzeichnet, dass** die Vertiefungen (32) in dem Lüfterrad (16) in axialer Richtung eine Tiefe von 1 - 8 mm, insbesondere 2 - 6 mm und weiter insbesondere 3 - 6 mm aufweisen.

5. Anker nach einem oder mehreren der vorstehenden Ansprüche, **dadurch gekennzeichnet, dass** das Lüfterrad (16) mit den Öffnungen oder Vertiefungen (32) ein einstückig hergestelltes Spritzgussteil ist.

6. Anker nach einem oder mehreren der vorstehenden Ansprüche, **dadurch gekennzeichnet, dass** die Stäbe (28) die Ankerwelle (4) käfigartig umgeben und eine radialen Abstand vom Außenumfang der Ankerwelle (4) von 5 - 10 mm, insbesondere von 5 - 8 mm haben.

7. Anker nach einem oder mehreren der vorstehenden Ansprüche, **dadurch gekennzeichnet, dass** die freien Stabenden (30) radial innerhalb eines Hauptwirkungsbereichs (34) der Lüfterradschaufeln (36) festgelegt sind.

8. Anker nach einem oder mehreren der vorstehenden Ansprüche, **dadurch gekennzeichnet, dass** die Stäbe (28) auf beiden Stirnseiten (24, 26) über den Wickelkopf (20, 22) axial überstehen.

9. Anker nach Anspruch 8, **dadurch gekennzeichnet, dass** der axiale Überstand auf der dem Kollektor (14) zugewandten Seite 3 - 20 mm beträgt.

10. Anker nach einem oder mehreren der vorstehenden Ansprüche, **dadurch gekennzeichnet, dass** die Dicke der Stäbe (28) 1 - 5 mm beträgt.

11. Elektromotor mit einem Anker (2) nach einem oder mehreren der vorstehenden Ansprüche.

12. Elektrowerkzeuggerät mit einem Elektromotor nach Anspruch 11.
